(19) Europäisches Patentamt
European Patent Office
Office européen des brevets

(11) **EP 4 752 171 A1**

(12) **EUROPEAN PATENT APPLICATION**
published in accordance with Art. 153(4) EPC

(43) Date of publication:
**03.06.2026 Bulletin 2026/23**

(21) Application number: **24846061.0**

(22) Date of filing: **25.07.2024**

(51) International Patent Classification (IPC):
***C08J 5/22*** *(2006.01)* ***C08F 212/34*** *(2006.01)*
***C08F 226/02*** *(2006.01)* ***C08F 2/50*** *(2006.01)*
***B01D 61/42*** *(2006.01)* ***B01D 69/10*** *(2006.01)*

(52) Cooperative Patent Classification (CPC):
**B01D 61/42; B01D 69/10; C08F 2/50; C08F 212/34; C08F 226/02; C08J 5/22;** Y02E 60/50

(86) International application number:
**PCT/KR2024/010798**

(87) International publication number:
**WO 2025/023759 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 KR 20230096993**

(71) Applicant: **Toray Advanced Materials Korea Inc.**
**Gumi-si, Gyeongsangbuk-do 39389 (KR)**

(72) Inventors:
- **CHOO, Jeongjoo**
**Gumi-si, Gyeongsangbuk-do 39389 (KR)**
- **CHAR, Bongjun**
**Gumi-si, Gyeongsangbuk-do 39389 (KR)**
- **KIM, Jihwan**
**Gumi-si, Gyeongsangbuk-do 39389 (KR)**

(74) Representative: **Mewburn Ellis LLP**
**Aurora Building**
**Counterslip**
**Bristol BS1 6BX (GB)**

(54) **ANION EXCHANGE MEMBRANE AND METHOD FOR MANUFACTURING SAME**

(57) An anion exchange membrane and a method of preparing the same are provided. The anion exchange membrane includes a porous polymer support, and an electrolyte containing an anion exchange polymer, wherein the electrolyte is located at least on a portion of the surface and the inside of pores of the porous support, and the anion exchange polymer may be a crosslinked product of a composition including a crosslinkable monomer represented by Formula 1 and an ionic monomer represented by Formula 2.

[Formula 1] [Formula 2]

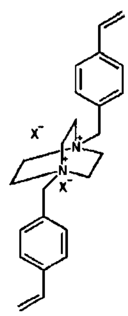
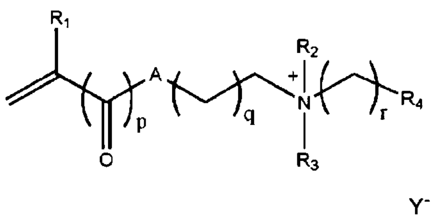

In Formulas 1 and 2, A, $R_1$, $R_2$, $R_3$, $R_4$, $X^-$, $Y^-$, p, q, and r are as disclosed in the specification.

EP 4 752 171 A1

FIG. 1

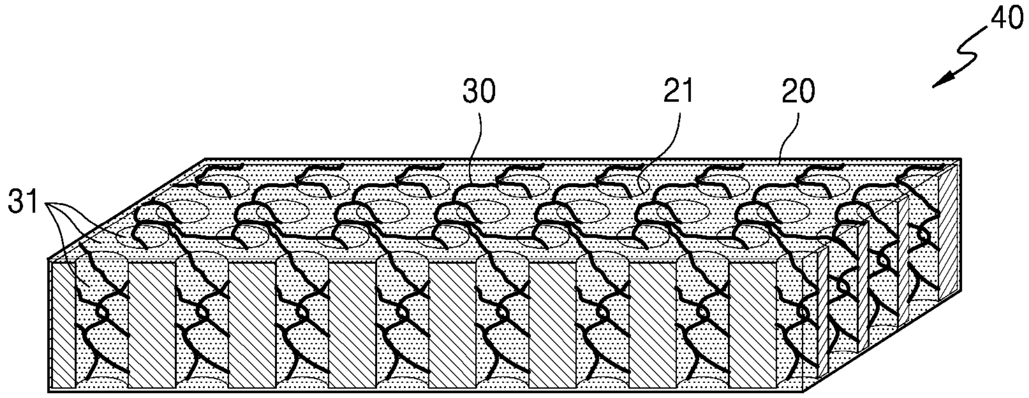

## Description

### Technical Field

The present disclosure relates to an anion exchange membrane and a method of preparing the same.

### Background Art

Ion exchange membranes are synthetic resin membranes that selectively allow cations and anions to permeate therethrough. Cation exchange membranes have negatively charged functional groups and may selectively allow cations to permeate therethrough, while anion exchange membranes have positively charged functional groups and may selectively allow anions to permeate therethrough. In general, ion exchange membranes require high permeation selectivity, low electrical resistance, excellent mechanical strength, high chemical stability, etc.

These anion exchange membranes may be applied in water treatment systems such as electrodialysis, bipolar membrane electrodialysis, capacitive deionization, electrodeionization, etc., or in systems such as fuel cells, water electrolysis, reverse electrodialysis, and redox flow batteries. Systems with anion exchange membranes may process acid or alkaline raw water, and acid or alkali may be generated during an operation of processing the raw water. Perfluorinated anion exchange membranes may be used as anion exchange membranes here, but due to their high cost, hydrocarbon-based anion exchange membranes are applied in actual systems. However, hydrocarbon-based anion exchange membranes are limited in the application process and conditions due to chemical resistance issues. In addition, anion exchange membranes including a support have a certain fraction of the support in the membrane, which limits the ability to increase the ion exchange capacity to improve membrane properties.

### Disclosure of Invention

### Technical Problem

According to an aspect, an electrolyte content in an ion exchange membrane is increased to provide an anion exchange membrane with high ion exchange capacity and excellent appearance.

According to another aspect, a method of preparing the anion exchange membrane described above is provided.

### Solution to Problem

According to an aspect,
an anion exchange membrane is provided including:

a porous polymer support; and
an electrolyte containing an anion exchange polymer,
wherein the electrolyte is located on at least a portion of the surface and inside of the pores of the porous polymer support,
wherein the anion exchange polymer is a crosslinked product of a composition including a crosslinkable monomer represented by Formula 1 and an ionic monomer represented by Formula 2,

[Formula 1] [Formula 2]

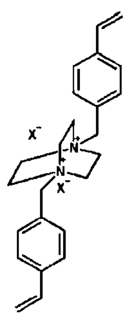

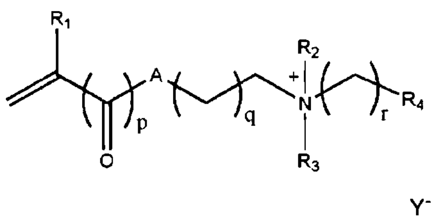

wherein Formula 1,
$X^-$ is a halogen anion;

wherein Formula 2,
A is -O-,

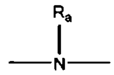
,

or

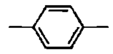
,

where $R_a$ is hydrogen, a substituted or unsubstituted C1 to C20 alkyl group, or a substituted or unsubstituted C5 to C40 aryl group;
$R_1$ is hydrogen or a substituted or unsubstituted C1 to C20 alkyl group;
$R_2$ and $R_3$ are each independently a substituted or unsubstituted C1 to C20 alkyl group, or a substituted or unsubstituted C5 to C40 aryl group;
$R_4$ is a substituted or unsubstituted C1 to C20 alkyl group, a substituted or unsubstituted C3 to C30 cycloalkyl group, or a substituted or unsubstituted C5 to C30 aryl group;
p is 0 or 1;
q is an integer from 0 to 6;
r is an integer from 0 to 6; and
$Y^-$ is a halogen anion.
Wherein Formula 2,
$R_4$ may be a substituted or unsubstituted C1 to C10 alkyl group, or a substituted or unsubstituted C6 to C20 aryl group.
Wherein Formula 2,
A is -O-; and
$R_4$ may be a substituted or unsubstituted C1 to C5 alkyl group, or a substituted or unsubstituted C6 to C15 aryl group.

The ionic monomer may include:

(3-acrylamidopropyl)trimethylammonium chloride, (3-acrylamidopropyl)trimethylammonium bromide, (3-acrylamidopropyl)trimethylammonium iodide;
(3-methacryloylamidopropyl)trimethylammonium chloride, (3-methacryloylamidopropyl)trimethylammonium bromide, (3-methacryloylamidopropyl)trimethylammonium iodide;
(2-acryloyloxyethyl)trimethylammonium chloride, (2-acryloyloxyethyl)trimethylammonium bromide, (2-acryloyloxyethyl)trimethylammonium iodide;
(2-methacryloyloxyethyl)trimethylammonium chloride, (2-methacryloyloxyethyl)trimethylammonium bromide, (2-methacryloyloxyethyl)trimethylammonium iodide;
N-(2-acryloyloxyethyl)-N-benzyl-N,N-dimethylammonium chloride, N-(2-acryloyloxyethyl)-N-benzyl-N,N-dimethylammonium bromide, N-(2-acryloyloxyethyl)-N-benzyl-N,N-dimethylammonium iodide;
benzyl dimethyl[2-(2-methyl-1-oxoallyl)oxyethyl]ammonium chloride, benzyl dimethyl[2-(2-methyl-1-oxoallyl)oxyethyl]ammonium bromide, benzyl dimethyl[2-(2-methyl-1-oxoallyl)oxyethyl]ammonium iodide;
2-(acryloyloxy)-N,N-dimethyl-N-(2-methylbenzyl)ethane-1-ammonium chloride, 2-(acryloyloxy)-N,N-dimethyl-N-(2-methylbenzyl)ethane-1-ammonium bromide, 2-(acryloyloxy)-N,N-dimethyl-N-(2-methylbenzyl)ethane-1-ammonium iodide;
2-(acryloyloxy)-N,N-dimethyl-N-(3-methylbenzyl)ethane-1-ammonium chloride, 2-(acryloyloxy)-N,N-dimethyl-N-(3-methylbenzyl)ethane-1-ammonium bromide, 2-(acryloyloxy)-N,N-dimethyl-N-(3-methylbenzyl)ethane-1-ammonium iodide;
2-(acryloyloxy)-N,N-dimethyl-N-(4-methylbenzyl)ethane-1-ammonium chloride, 2-(acryloyloxy)-N,N-dimethyl-N-(4-methylbenzyl)ethane-1-ammonium bromide, 2-(acryloyloxy)-N,N-dimethyl-N-(4-methylbenzyl)ethane-1-ammonium iodide;
2-(acryloyloxy)-N-(3,5-dimethylbenzyl)-N,N-dimethylethane-1-ammonium chloride, 2-(acryloyloxy)-N-(3,5-dimethylbenzyl)-N,N-dimethylethane-1-ammonium bromide, 2-(acryloyloxy)-N-(3,5-dimethylbenzyl)-N,N-dimethylethane-1-ammonium iodide;
2-(acryloyloxy)-N-(4-isopropylbenzyl)-N,N-dimethylethane-1-ammonium chloride, 2-(acryloyloxy)-N-(4-isopropylbenzyl)-N,N-dimethylethane-1-ammonium bromide, 2-(acryloyloxy)-N-(4-isopropylbenzyl)-N,N-dimethylethane-1-ammonium iodide;

2-(acryloyloxy)-N-(4-(tert-butyl)benzyl)-N,N-dimethylethane-1-ammonium chloride, 2-(acryloyloxy)-N-(4-(tert-butyl)benzyl)-N,N-dimethylethane-1-ammonium bromide, 2-(acryloyloxy)-N-(4-(tert-butyl)benzyl)-N,N-dimethylethane-1-ammonium iodide;
2-(acryloyloxy)-N-(3,5-di-tert-butylbenzyl)-N,N-dimethylethane-1-ammonium chloride, 2-(acryloyloxy)-N-(3,5-di-tert-butylbenzyl)-N,N-dimethylethane-1-ammonium bromide, 2-(acryloyloxy)-N-(3,5-di-tert-butylbenzyl)-N,N-dimethylethane-1-ammonium iodide;
2-(acryloyloxy)-N,N-dimethyl-N-(naphthalen-1-ylmethyl)ethane-1-ammonium chloride, 2-(acryloyloxy)-N,N-dimethyl-N-(naphthalen-1-ylmethyl)ethane-1-ammonium bromide, 2-(acryloyloxy)-N,N-dimethyl-N-(naphthalen-1-ylmethyl)ethane-1-ammonium iodide;
2-(acryloyloxy)-N-((9,10-dihydropyrene-4-yl)methyl)-N,N-dimethylethane-1-ammonium chloride, 2-(acryloyloxy)-N-((9,10-dihydropyrene-4-yl)methyl)-N,N-dimethylethane-1-ammonium bromide, 2-(acryloyloxy)-N-((9,10-dihydropyrene-4-yl)methyl)-N,N-dimethylethane-1-ammonium iodide;
(vinylbenzyl)trimethylammonium chloride, (vinylbenzyl)trimethylammonium bromide, (vinylbenzyl)trimethylammonium iodide; and
(2-methylvinylbenzyl)trimethylammonium chloride, (2-methylvinylbenzyl)trimethylammonium bromide, (2-methylvinylbenzyl)trimethylammonium iodide.

The weight ratio of the crosslinkable monomer to the ionic monomer may be from 1:0.2 to 1:8.

The total content of the crosslinkable monomer and the ionic monomer may be from 30 wt% to 85 wt% based on the total 100 wt% of the composition.

The composition may further include a photoinitiator,
and the content of the photoinitiator may be from 0.01 wt% to 2 wt% based on the total 100 wt% of the composition.

The porous polymer support may be a membrane structure, a nonwoven fabric structure, a woven fabric structure, or a mesh structure.

The porous polymer support may include one or more polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone.

The porosity of the porous polymer support may be from 30 % to 80 %, and its thickness may be from 10 $\mu$m to 150 $\mu$m.

The sheet resistance ($R_m$) of the anion exchange membrane, according to the following Equation 1, may be 6 $\Omega \cdot cm^2$ or less:

[Equation 1]

$$R_m(\Omega \cdot cm^2) = (R_{11} - R_{12}) \times S$$

wherein the equation,

$R_m$ is the sheet resistance of the anion exchange membrane,
$R_{11}$ is the wire resistance of the anion exchange membrane,
$R_{12}$ is the resistance of a 0.5 M NaCl aqueous solution, and
S is the area of the electrode.

The ion exchange capacity (IEC) of the anion exchange membrane may be 1.5 meq/g or more.

The anion exchange membrane may be used in electrodialysis, bipolar membrane electrodialysis, electrodeionization, capacitive deionization, or water electrolysis systems.

According to another aspect, a method of preparing the aforementioned anion exchange membrane is provided, including:

providing a porous polymer support;
preparing a composition for forming an anion exchange polymer, including a crosslinkable monomer represented by Formula 1, an ionic monomer represented by Formula 2, a photoinitiator, and a solvent;
impregnating the porous polymer support with the composition, thereby filling at least a portion of the surface and inside of the pores of the porous polymer support with the composition;
pressing a polyester-based film onto at least one surface of the porous polymer support filled with the composition to produce a laminate in which the polyester-based film and the porous polymer support are laminated;
irradiating light to the laminate and crosslinking the composition to form an anion exchange polymer, as a crosslinked

product of the composition, on at least a portion of the surface and inside of the pores of the porous polymer support; and

peeling the polyester-based film from the porous polymer support having the anion exchange polymer formed on at least a portion of its surface and internal pores to prepare the anion exchange membrane,

[Formula 1] [Formula 2]

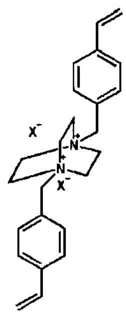

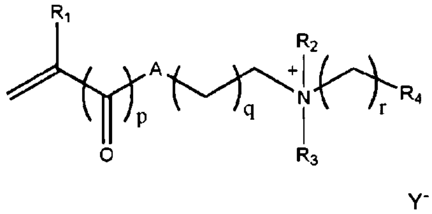

wherein Formula 1,

$X^-$ is a halogen anion;

wherein Formula 2,

A is -O-,

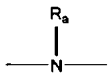

,

or

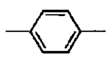

,

where $R_a$ is hydrogen, a substituted or unsubstituted C1 to C20 alkyl group, or a substituted or unsubstituted C5 to C40 aryl group;

$R_1$ is hydrogen or a substituted or unsubstituted C1 to C20 alkyl group;

$R_2$ and $R_3$ are each independently a substituted or unsubstituted C1 to C20 alkyl group, or a substituted or unsubstituted C5 to C40 aryl group;

$R_4$ is a substituted or unsubstituted C1 to C20 alkyl group, a substituted or unsubstituted C3 to C30 cycloalkyl group, or a substituted or unsubstituted C5 to C30 aryl group;

p is 0 or 1;

q is an integer from 0 to 6;

r is an integer from 0 to 6; and

$Y^-$ is a halogen anion.

In forming the anion exchange polymer, the light may be ultraviolet rays, and may include a process of irradiating the light with a light amount of 2000 $mJ/cm^2$ to 10000 $mJ/cm^2$.

**Advantageous Effects of Invention**

According to an aspect, an anion exchange membrane includes an electrolyte containing an anion exchange polymer, which is a crosslinked product of a composition including a crosslinkable monomer represented by Formula 1 and an ionic monomer represented by Formula 2, and a porous polymer support. The electrolyte surrounds at least a portion of the surface and inside of the pores of the porous polymer support. As a result, by increasing the content of the electrolyte within the anion exchange membrane, the ion exchange capacity is increased, thereby improving the performance of the anion exchange membrane.

## Brief Description of Drawings

FIG. 1 is a schematic diagram of an anion exchange membrane according to an embodiment.

## Mode for the Invention

Hereinafter, an anion exchange membrane and a method of preparing the same according to an embodiment will be described in more detail.

Unless otherwise defined, all technical and scientific terms used in the present specification have the same meaning as commonly understood by those skilled in the art to which the present disclosure pertains. In case of any conflict, the definitions provided in the present specification shall prevail. Although methods and materials similar or equivalent to those described in the present specification may be used in the practice or testing of the present disclosure, suitable methods and materials are disclosed in the present specification. In the present specification, the term "including" means that additional components may be included, unless expressly disclosed otherwise, and does not exclude other components. In the present specification, the term "these combinations" refers to a mixture or combination with one or more of the disclosed components. In the present specification, the term "and/or" refers to any combination of the one or more items disclosed and includes all combinations. In the present specification, the term "or" refers to "and/or." In the present specification, the expressions "at least one of the components" or "one or more" are intended to supplement the list of components as a whole and are not intended to supplement individual components of the disclosure. In the present specification, when it is mentioned that a component is placed "on" or "above" another component, the component may be placed directly on the other component, or there may be interposed components between the components. On the other hand, when it is mentioned that a component is placed "directly on" or "directly above" another component, there may be no interposed components. In the present specification, the terms "~ resin," "~ polymer," "~ copolymer," or/and "~ resin, polymer, or copolymer derivatives" all refer to the broad concept encompassing "~ resin," "~ polymer," "~ copolymer," or/and "~ resin, polymer, or copolymer derivatives." In the present specification, the term "polymer or copolymer crosslinked with these resins" refers to "the polymer or copolymer crosslinked with the aforementioned resin."

A general anion exchange membrane has a structure in which an anion exchange polymer having a cationic functional group is placed on the upper part of a support. Anion exchange membranes are required to have high selectivity for anions, low electrical resistance, excellent mechanical strength, and chemical stability.

Anion exchange membranes are known to include perfluorinated anion exchange membranes and hydrocarbon-based anion exchange membranes. Among them, hydrocarbon-based anion exchange membranes are less expensive compared to perfluorinated anion exchange membranes, but have insufficient chemical resistance. In addition, anion exchange membranes incorporating a support have a certain percentage of support fraction, therefore there is a limit to increasing the ion exchange capacity to improve concentration and desalination performance, etc.

The inventors of the present disclosure have addressed the aforementioned issues to provide an anion exchange membrane with excellent appearance by increasing the electrolyte content within the ion exchange membrane.

An anion exchange membrane according to an embodiment may include: a porous polymer support; and an electrolyte containing an anion exchange polymer, wherein the electrolyte is located on at least a portion of the surface and inside of the pores of the porous polymer support, wherein the anion exchange polymer is a crosslinked product of a composition including a crosslinkable monomer represented by Formula 1 and an ionic monomer represented by Formula 2,

[Formula 1] [Formula 2]

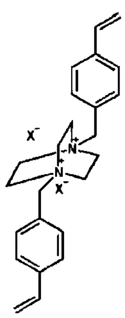

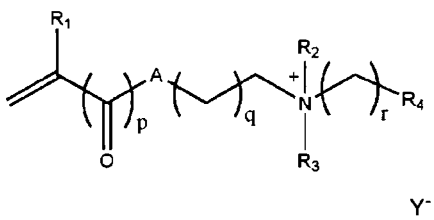

wherein Formula 1,

$X^-$ may be a halogen anion;

wherein Formula 2,
A may be -O-,

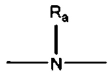,

or

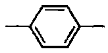,

where $R_a$ may be hydrogen, a substituted or unsubstituted C1 to C20 alkyl group, or a substituted or unsubstituted C5 to C40 aryl group;
$R_1$ may be hydrogen or a substituted or unsubstituted C1 to C20 alkyl group;
$R_2$ and $R_3$ may each independently be a substituted or unsubstituted C1 to C20 alkyl group, or a substituted or unsubstituted C5 to C40 aryl group;
$R_4$ may be a substituted or unsubstituted C1 to C20 alkyl group, a substituted or unsubstituted C3 to C30 cycloalkyl group, or a substituted or unsubstituted C5 to C30 aryl group;
p may be 0 or 1;
q may be an integer from 0 to 6;
r may be an integer from 0 to 6; and
$Y^-$ may be a halogen anion.

In the ionic monomer represented by Formula 2, the vinyl group is a functional group capable of crosslinking with the crosslinkable monomer represented by Formula 1.

An anion exchange membrane according to an embodiment may have lower sheet resistance and superior appearance compared to an anion exchange membrane including an anion exchange polymer prepared using the crosslinkable monomer represented by Formula 1 without the ionic monomer.

For example, in Formula 2, $R_4$ may be a substituted or unsubstituted C1 to C10 alkyl group, or a substituted or unsubstituted C6 to C20 aryl group.

For example, in Formula 2, A may be -O-; and $R_4$ may be a substituted or unsubstituted C1 to C5 alkyl group, or a substituted or unsubstituted C6 to C15 aryl group.

For example, the ionic monomer may include:

(3-acrylamidopropyl)trimethylammonium chloride, (3-acrylamidopropyl)trimethylammonium bromide, (3-acrylamidopropyl)trimethylammonium iodide;
(3-methacryloylamidopropyl)trimethylammonium chloride, (3-methacryloylamidopropyl)trimethylammonium bromide, (3-methacryloylamidopropyl)trimethylammonium iodide;
(2-acryloyloxyethyl)trimethylammonium chloride, (2-acryloyloxyethyl)trimethylammonium bromide, (2-acryloyloxyethyl)trimethylammonium iodide;
(2-methacryloyloxyethyl)trimethylammonium chloride, (2-methacryloyloxyethyl)trimethylammonium bromide, (2-methacryloyloxyethyl)trimethylammonium iodide;
N-(2-acryloyloxyethyl)-N-benzyl-N,N-dimethylammonium chloride, N-(2-acryloyloxyethyl)-N-benzyl-N,N-dimethylammonium bromide, N-(2-acryloyloxyethyl)-N-benzyl-N,N-dimethylammonium iodide;
benzyl dimethyl[2-(2-methyl-1-oxoallyl)oxyethyl]ammonium chloride, benzyl dimethyl[2-(2-methyl-1-oxoallyl)oxyethyl]ammonium bromide, benzyl dimethyl[2-(2-methyl-1-oxoallyl)oxyethyl]ammonium iodide;
2-(acryloyloxy)-N,N-dimethyl-N-(2-methylbenzyl)ethane-1-ammonium chloride, 2-(acryloyloxy)-N,N-dimethyl-N-(2-methylbenzyl)ethane-1-ammonium bromide, 2-(acryloyloxy)-N,N-dimethyl-N-(2-methylbenzyl)ethane-1-ammonium iodide;
2-(acryloyloxy)-N,N-dimethyl-N-(3-methylbenzyl)ethane-1-ammonium chloride, 2-(acryloyloxy)-N,N-dimethyl-N-(3-methylbenzyl)ethane-1-ammonium bromide, 2-(acryloyloxy)-N,N-dimethyl-N-(3-methylbenzyl)ethane-1-ammonium iodide;
2-(acryloyloxy)-N,N-dimethyl-N-(4-methylbenzyl)ethane-1-ammonium chloride, 2-(acryloyloxy)-N,N-dimethyl-N-(4-methylbenzyl)ethane-1-ammonium bromide, 2-(acryloyloxy)-N,N-dimethyl-N-(4-methylbenzyl)ethane-1-ammonium iodide;
2-(acryloyloxy)-N-(3,5-dimethylbenzyl)-N,N-dimethylethane-1-ammonium chloride, 2-(acryloyloxy)-N-(3,5-dimethylbenzyl)-N,N-dimethylethane-1-ammonium bromide, 2-(acryloyloxy)-N-(3,5-dimethylbenzyl)-N,N-dimethylethane-1-ammonium iodide;

2-(acryloyloxy)-N-(4-isopropylbenzyl)-N,N-dimethylethane-1-ammonium chloride, 2-(acryloyloxy)-N-(4-isopropylbenzyl)-N,N-dimethylethane-1-ammonium bromide, 2-(acryloyloxy)-N-(4-isopropylbenzyl)-N,N-dimethylethane-1-ammonium iodide;

2-(acryloyloxy)-N-(4-(tert-butyl)benzyl)-N,N-dimethylethane-1-ammonium chloride, 2-(acryloyloxy)-N-(4-(tert-butyl)benzyl)-N,N-dimethylethane-1-ammonium bromide, 2-(acryloyloxy)-N-(4-(tert-butyl)benzyl)-N,N-dimethylethane-1-ammonium iodide;

2-(acryloyloxy)-N-(3,5-di-tert-butylbenzyl)-N,N-dimethylethane-1-ammonium chloride, 2-(acryloyloxy)-N-(3,5-di-tert-butylbenzyl)-N,N-dimethylethane-1-ammonium bromide, 2-(acryloyloxy)-N-(3,5-di-tert-butylbenzyl)-N,N-dimethylethane-1-ammonium iodide;

2-(acryloyloxy)-N,N-dimethyl-N-(naphthalen-1-ylmethyl)ethane-1-ammonium chloride, 2-(acryloyloxy)-N,N-dimethyl-N-(naphthalen-1-ylmethyl)ethane-1-ammonium bromide, 2-(acryloyloxy)-N,N-dimethyl-N-(naphthalen-1-ylmethyl)ethane-1-ammonium iodide;

2-(acryloyloxy)-N-((9,10-dihydropyrene-4-yl)methyl)-N,N-dimethylethane-1-ammonium chloride, 2-(acryloyloxy)-N-((9,10-dihydropyrene-4-yl)methyl)-N,N-dimethylethane-1-ammonium bromide, 2-(acryloyloxy)-N-((9,10-dihydropyrene-4-yl)methyl)-N,N-dimethylethane-1-ammonium iodide;

(vinylbenzyl)trimethylammonium chloride, (vinylbenzyl)trimethylammonium bromide, (vinylbenzyl)trimethylammonium iodide; and

(2-methylvinylbenzyl)trimethylammonium chloride, (2-methylvinylbenzyl)trimethylammonium bromide, (2-methylvinylbenzyl)trimethylammonium iodide.

For example, the ionic monomer may include: (3-acrylamidopropyl)trimethylammonium chloride, (3-methacryloylamidopropyl)trimethylammonium chloride, (2-acryloyloxyethyl)trimethylammonium chloride, (2-methacryloyloxyethyl)trimethylammonium chloride, N-(2-acryloyloxyethyl)-N-benzyl-N,N-dimethylammonium chloride, benzyl dimethyl[2-(2-methyl-1-oxoallyl)oxyethyl]ammonium chloride, (vinylbenzyl)trimethylammonium chloride, and (2-methylvinylbenzyl)trimethylammonium chloride.

The weight ratio of the crosslinkable monomer to the ionic monomer may be from 1:0.2 to 1:8. For example, the weight ratio of the crosslinkable monomer to the ionic monomer may be from 1:0.2 to 1:5 or may be from 1:0.5 to 1:5. When the weight ratio of the crosslinkable monomer to the ionic monomer is within the above range, the anion exchange performance of the anion exchange membrane may be improved without deteriorating the solubility characteristics of the composition for forming the anion exchange polymer.

The total content of the crosslinkable monomer and the ionic monomer may be from 30 wt% to 85 wt% based on the total 100 wt% of the composition. For example, the total content of the crosslinkable monomer and the ionic monomer may be from 35 wt% to 80 wt% or may be from 40 wt% to 75 wt% based on 100 wt% of the entire composition. If the total content of the crosslinkable monomer and the ionic monomer is less than 30 wt%, the anion exchange performance of the anion exchange membrane may be reduced, and if it is greater than 85 wt%, the solubility of the monomer constituting the anion exchange polymer may be reduced when preparing an electrolyte solution of the composition.

The composition may further include a photoinitiator, wherein the content of the photoinitiator may be from 0.01 wt% to 2 wt% based on 100 wt% of the entire composition. The photoinitiator may be any photoinitiator usable in the relevant technical field without limitation, however, may be, for example, 2-hydroxy-2-methylpropiophenone. For example, and the content of the photoinitiator may be from 0.1 wt% to 1 wt% based on the total 100 wt% of the composition.

FIG. 1 is a schematic diagram of an anion exchange membrane according to an embodiment.

Referring to FIG. 1, an anion exchange membrane 40 according to an embodiment has an anion exchange polymer 31 having a cationic functional group positioned on a surface and internal pores 21 of a porous polymer support 20. The anion exchange polymer 31 having the cationic functional group is uniformly distributed on the surface and internal pores 21 of the porous polymer support 20, so that the homogeneous anion exchange membrane 40 may be obtained. This anion exchange membrane 40 structure may have low sheet resistance and high ion conductivity. In addition, the porous polymer support 20 may improve mechanical durability and may have high dimensional stability.

The porous polymer support 20 may be in the form of a sponge or a three-dimensional network. The porous polymer support 20 may be a membrane structure, a nonwoven fabric structure, a woven fabric structure, or a mesh structure.

The porous polymer support 20 may include one or more polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone. For example, the porous polymer support 20 may include one or more polymers selected from polyethylene, polypropylene, and polyvinyl alcohol.

The porosity of the porous polymer support 20 may be from 30 % to 80 %. Wherein, % represents volume %. The pore size of the porous polymer support 20 represents the average diameter when the pores are spherical, and represents the major axis length when the pores are non-spherical. The porosity and pore size of the porous polymer support 20 may

be measured by the BET method and/or from surface SEM images, and the porosity may be obtained through the area ratio from cross-sectional SEM image analysis. Porosity may also be calculated using basis weight and thickness.

The thickness of the porous polymer support 20 may be from 10 μm to 150 μm. For example, the thickness of the porous polymer support 20 may be from 20 μm to 150 μm, or may be from 40 μm to 150 μm, or may be from 60 μm to 140 μm. Within the thickness range of the porous polymer support, the sheet resistance may be reduced and the ion exchange capacity may be increased.

The sheet resistance ($R_m$) of the anion exchange membrane 40, according to the following Equation 1, may be 6 $\Omega\cdot cm^2$ or less:

[Equation 1]

$$R_m(\Omega\cdot cm^2) = (R_{11} - R_{12}) \times S$$

wherein the equation,

$R_m$ may be the sheet resistance of the anion exchange membrane,
$R_{11}$ may be the wire resistance of the anion exchange membrane,
$R_{12}$ may be the resistance of a 0.5 M NaCl aqueous solution, and
S may be the area of the electrode.

The ion exchange capacity (IEC) of the anion exchange membrane 40 may be 1.5 meq/g or more.

The anion exchange membrane 40 may be used in electrodialysis, bipolar membrane electrodialysis, electrodeionization, capacitive deionization, or water electrolysis systems.

The anion exchange membrane 40 may also be used in energy systems such as fuel cells, water electrolysis, reverse electrodialysis, and redox flow batteries, etc.

According to another embodiment, a method of preparing an anion exchange membrane includes: providing a porous polymer support; preparing a composition for forming an anion exchange polymer, including a crosslinkable monomer represented by Formula 1, an ionic monomer represented by Formula 2, a photoinitiator, and a solvent; impregnating the porous polymer support with the composition, thereby filling at least a portion of the surface and inside of the pores of the porous polymer support with the composition; pressing a polyester-based film onto at least one surface of the porous polymer support filled with the composition to produce a laminate in which the polyester-based film and the porous polymer support are laminated; irradiating light to the laminate and crosslinking the composition to form an anion exchange polymer, as a crosslinked product of the composition, on at least a portion of the surface and inside of the pores of the porous polymer support; and peeling the polyester-based film from the porous polymer support having the anion exchange polymer formed on at least a portion of its surface and internal pores to prepare the anion exchange membrane,

[Formula 1] [Formula 2]

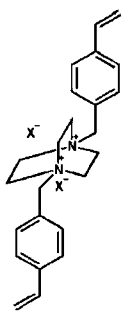

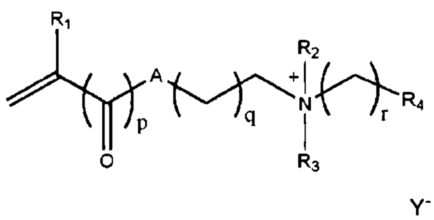

wherein Formula 1,

$X^-$ may be a halogen anion;
wherein Formula 2,
A is -O-,

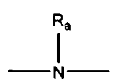
,

or

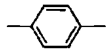

,

where $R_a$ may be hydrogen, a substituted or unsubstituted C1 to C20 alkyl group, or a substituted or unsubstituted C5 to C40 aryl group;

$R_1$ may be hydrogen or a substituted or unsubstituted C1 to C20 alkyl group;

$R_2$ and $R_3$ may each independently be a substituted or unsubstituted C1 to C20 alkyl group, or a substituted or unsubstituted C5 to C40 aryl group;

$R_4$ may be a substituted or unsubstituted C1 to C20 alkyl group, a substituted or unsubstituted C3 to C30 cycloalkyl group, or a substituted or unsubstituted C5 to C30 aryl group;

p may be 0 or 1;

q may be an integer from 0 to 6;

r may be an integer from 0 to 6; and

$Y^-$ may be a halogen anion.

First, a porous polymer support is provided.

Since the shape, structure, material, porosity, pore size, thickness, etc. of the porous polymer support are the same as described above, so further description will be omitted.

Before immersing the porous polymer support in an ion exchange resin solution, which is an anion exchange polymer forming composition, the method may further include immersing the porous polymer support in a surfactant solution and drying it to hydrophilize the surface of the porous polymer support, so that the ion exchange resin solution surrounds the pores and outer surface of the porous polymer support.

Hydrophilization may be performed depending on the degree of hydrophilization of the porous polymer support or the structure of the porous polymer support, and may be omitted if the degree of hydrophilization of the porous polymer support is sufficient or the pores of the substrate are sufficiently large so that the ion exchange resin solution may be filled.

During the hydrophilization step, immersion may be performed for 0.1 to 10 minutes, or for 0.5 to 8 minutes. If the immersion is performed for less than 0.1 minutes, the surface of the porous polymer support may not be sufficiently hydrophilized, which may result in a problem in which the ion exchange resin solution does not fill the pores of the porous polymer support and if the immersion is performed for more than 10 minutes, problems such as a decrease in production speed and an increase in production cost may occur.

Through the aforementioned immersion, the pores of the porous polymer support may be filled with an ion exchange resin solution, resulting in a pore-filled form. Additionally, the ion exchange resin may be in a form that wraps around the outer surface of the porous polymer support.

Additionally, when hydrophilizing, drying may be performed immediately after immersion, and may be performed at a temperature of 40 to 90 °C for 1 to 20 minutes, or at a temperature of 40 to 80 °C for 1 to 10 minutes.

Meanwhile, the surfactant solution may include 0.001 to 6 wt% of the surfactant and the remainder of the solvent, or may include 0.01 to 4 wt% of the surfactant and the remainder of the solvent, or may include 0.05 to 3 wt% of the surfactant and the remainder of the solvent.

If the surfactant is included in an amount of less than 0.001 wt% in the surfactant solution, the surface of the porous polymer support may not be hydrophilized, which may cause a problem in which the ion exchange resin solution is not filled into the pores of the substrate, and if the surfactant is included in an amount exceeding 6 wt%, the surfactant may be eluted or the ion exchange resin filling amount may be reduced.

Any known surfactant may be used without limitation, but for example, one or more materials selected from dodecylbenzenesulfonic acid (DBSA), alkylbenzenesulfonic acid (ABS), linear alkylbenzenesulfonic acid (LAS), alphasulfonic acid (AS), alphaolefinsulfonic acid (AOS), alcoholpolyoxyethyleneether (AE), and alcoholpolyoxyethyleneethersulfonic acid (AES) may be used. For example, the surfactant may be dodecylbenzenesulfonic acid.

When a surfactant is combined with a hydrophobic portion of a porous polymer support surface through hydrophobic interaction, the hydrophilic portion of the surfactant replaces the surface of the porous polymer support, thereby may achieve hydrophilization. Here, not only the outer surface of the porous polymer support but also the entire internal pore surface may be hydrophilized by the surfactant. However, if the degree of hydrophilization of the porous polymer support is sufficient or the pores of the porous polymer support are sufficiently large so that the composition for forming the anion exchange polymer may be filled, it may be omitted.

Next, a composition for forming the anion exchange polymer, which is an ion exchange resin solution including a crosslinkable monomer represented by the Formula 1, which is an electrolyte monomer having a cationic group, an ionic monomer represented by the Formula 2, a photoinitiator, and a solvent, is prepared.

By irradiating the ion exchange resin solution with ultraviolet rays, the crosslinkable monomer represented by Formula 1, which is an electrolyte monomer having a cationic group, and the ionic monomer represented by Formula 2 may be crosslinked to form a crosslinked product.

In the present specification, the term "crosslinked product" refers not only to a polymer formed by crosslinking the crosslinkable monomer represented by Formula 1 and the ionic monomer represented by Formula 2, but also includes all of the initial reaction products, intermediate reaction products, final reaction products, and unreacted products, etc.

The total content of the crosslinkable monomer represented by Formula 1, the ionic monomer represented by Formula 2, and the type and content of the photoinitiator are the same as described above, so further description will be omitted.

The solvent may be any solvent usable in the relevant technical field without limitation, however, may be, for example, a water-soluble solvent such as water, methanol, or ethanol, etc., and may be distilled water. The solvent may be included as a remainder in the composition for forming the anion exchange polymer, excluding the crosslinkable monomer represented by Formula 1, the ionic monomer represented by Formula 2, and the photoinitiator.

A polyester-based film is pressed onto at least one surface of the porous polymer support filled with the composition to produce a laminate in which the polyester-based film and the porous polymer support are laminated.

The polyester-based film may be pressed onto an upper surface or/and lower surface of the porous polymer support by roll calendering. The polyester-based film may be, for example, a polyethylene terephthalate film.

The thickness of the polyester-based film may be from 10 μm to 150 μm, and for example, may be from 20 μm to 120 μm or from 30 μm to 100 μm. If the thickness of the polyester-based film is less than 10 μm, bonding defects such as film wrinkling may occur when laminating with a support filled with the anion exchange polymer. If the thickness of the polyester-based film is greater than 150 μm, the thickness of the polyester-based film may be too thick during the crosslinking reaction described below, so that light may not be sufficiently irradiated to the porous polymer support, and the crosslinking reaction may not occur sufficiently.

The polyester-based film may have one surface, which comes into contact with the porous polymer support, which is untreated or release-treated. By using such a film, the bond between the polyester-based film and the hydrophilic anion exchange polymer may be prevented, thereby preventing the anion exchange polymer from being removed from the support surface. Pressing may be performed at a temperature of 10 °C to 35 °C, for example at a temperature of 15 °C to 30 °C, and at a pressure of about 0 bar to 5 bar. The pressure may be appropriately controlled by considering the thickness of the porous polymer support and the thickness of the polyester-based film.

Next, light is irradiated onto the laminate and the composition is crosslinked to form the anion exchange polymer, which is a crosslinked product of the composition, on the surface and inside of the pores of the porous polymer support.

During the formation of the anion exchange polymer, ultraviolet, the light may be ultraviolet light. For example, UVA, UVB, UVC or/and UVV may be used.

The light may be UVC, and the irradiation may be performed with a light amount of 2000 $mJ/cm^2$ to 10000 $mJ/cm^2$. For example, the light may be irradiated using UVC at a light amount of 2000 $mJ/cm^2$ to 8000 $mJ/cm^2$. When photoirradiation is performed under these conditions, an ion exchange membrane with improved ion exchange capacity may be prepared.

Finally, the polyester-based film is peeled off from the porous polymer support in which the anion exchange polymer is formed on the surface and inside the pores to prepare an anion exchange membrane. Peeling may be accomplished by pulling a polyester-based film attached to the porous polymer support in the opposite direction using a peeling roll.

An anion exchange membrane prepared according to the above preparation method may include a porous polymer support; and an anion exchange polymer, which is an ion exchange resin that fills the pores of the porous polymer support and surrounds the outer surface of the substrate.

The average thickness of the anion exchange membrane may be from 10 to 200 μm, and for example, may be from 12 to 150 μm. If the average thickness is less than 10 μm, the durability of the anion exchange membrane may be reduced, leading to concerns about membrane damage during operation, and desalination and concentration performance may be reduced due to unnecessary salt permeation, and if the thickness is greater than 200 μm, the sheet resistance increases, leading to higher power consumption required for operation, and desalination and concentration performance may be reduced.

Furthermore, the ion exchange capacity (IEC) of the anion exchange membrane may be 1.5 meq/g or more, or 1.6 meq/g or more.

In the present specification, the term "substitution" is induced by an exchange of one or more hydrogens in an unsubstituted mother group with another atom or functional group. Unless disclosed otherwise, when a functional group is considered to be "substituted", it means that the functional group is substituted with one or more substituents selected from an alkyl group having 1 to 20 carbon atoms, an alkenyl group having 2 to 20 carbon atoms, an alkynyl group having 2 to 20 carbon atoms, a cycloalkyl group having 3 to 30 carbon atoms, a cycloalkenyl group having 3 to 30 carbon atoms, and an aryl group having 6 to 40 carbon atoms. When a functional group is disclosed as being "optionally substituted," it means

that the functional group may be substituted with the aforementioned substituents.

In the present specification, the alkyl group having C1 to C20 refers to, for example, a straight-chain alkyl group such as a methyl group, an ethyl group, a hexyl group, an octyl group, a decyl group, etc.; a branched alkyl group such as an isopropyl group, a tert-butyl group, a neopentyl group, a hexyl group, etc. Among these, it may be a methyl group or an ethyl group, considering the ease of procurement of raw materials and the usability of the product. One or more hydrogen atoms of the above alkyl group may be substituted with a substituent as defined in "substitution" described above.

In the present specification, a cycloalkyl group of C3 to C30 refers to a cyclic alkyl group such as a cyclopropyl group, a cyclobutyl group, a cyclopentyl group, a cyclohexyl group, etc. One or more hydrogen atoms of the above cycloalkyl group may be substituted with a substituent as defined in "substitution" described above.

In the present specification, the aryl group of C5 to C40 refers to an aromatic system including one or more benzene rings, such as a phenyl group, a naphthyl group, etc. One or more hydrogen atoms of the above aryl group may be substituted with a substituent as defined in "substitution" described above.

In the present specification, examples of halogen anions may be F-, Cl-, Br-, I-, etc.

Hereinafter, the present disclosure will be described through the following examples. At this time, the following examples are presented only to illustrate the disclosure, and the scope of the rights of the present disclosure is not limited by the following examples.

[Example]

**Preparation Example 1: Preparation of Crosslinkable Monomer**

To a solution of 1,4-diazabicyclo[2,2,2]octane dissolved in methanol, a solution of 4-vinylbenzyl chloride dissolved in ethyl acetate was added so that the molar ratio of vinylbenzyl chloride and 1,4-diazabicyclo[2,2,2]octane was 2:1, and stirred at room temperature under an inert atmosphere to prepare a mixture. The mixture was filtered, washed with methanol, and dried under vacuum at room temperature (25 °C) to obtain a crosslinkable monomer represented by the following Formula 1-1.

<Formula 1-1>

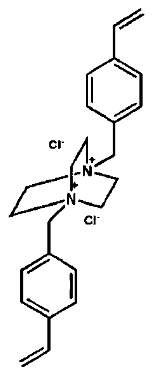

**Example 1: Preparation of Anion Exchange Membrane**

A polypropylene (PP) porous polymer support (porosity: 51%) with a thickness of 100 $\mu$m was prepared. The porous polymer support was immersed in a 1 wt% dodecylbenzenesulfonic acid aqueous solution for 10 minutes and then dried in a 70 °C hot air oven for 10 minutes to make it hydrophilic. The hydrophilicized porous polymer support was immersed in a composition for forming an anion exchange polymer, which is an ion exchange resin solution, for 5 minutes to fill the porous polymer support with the ion exchange resin solution.

At this time, the composition for forming anion exchange polymer was prepared by mixing 20 wt% of the crosslinkable monomer of Formula 1-1 obtained according to Preparation Example 1, 40 wt% of N-(2-acryloyloxyethyl)-N-benzyl-N,N-dimethylammonium chloride ionic monomer, 0.5 wt% of 2-hydroxy-2-methylpropiophenone (manufactured by Ciba) photoinitiator, and the remaining amount of distilled water.

The composition for forming anion exchange polymer was impregnated with the polypropylene porous polymer support, and the composition was filled on the surface and inside of the pores of the porous polymer support. The porous polymer support filled with the composition was put into a pressing roll, and a polyester film having a thickness of 50 $\mu$m was pressed on the upper surface and lower surface of the porous polymer support at room temperature (25 °C), thereby preparing a laminate in which the polyester film and the porous polymer support were laminated. The laminate was

irradiated with UVC ultraviolet rays at a light amount of 3000 mJ/cm$^2$ to form an anion exchange polymer, which is a crosslinked product of the composition, on the surface and inside the pores of the porous polymer support. The polyester-based film was peeled off from the porous polymer support on which the anion exchange polymer was formed on the surface and inside the pores, to prepare an anion exchange membrane.

**Example 2: Preparation of Anion Exchange Membrane**

An anion exchange membrane was prepared in the same manner as in Example 1, except that 40 wt% of (2-acryloyloxyethyl)trimethylammonium chloride was used as an ionic monomer in the composition for forming the anion exchange polymer.

**Example 3: Preparation of Anion Exchange Membrane**

An anion exchange membrane was prepared in the same manner as in Example 1, except that 40 wt% of (3-acrylamidopropyl)trimethylammonium chloride was used as an ionic monomer in the composition for forming the anion exchange polymer.

**Example 4: Preparation of Anion Exchange Membrane**

An anion exchange membrane was prepared in the same manner as in Example 1, except that 40 wt% of 2-(acryloyloxy)-N,N-dimethyl-N-(4-methylbenzyl)ethane-1-ammonium chloride was used as an ionic monomer in the composition for forming the anion exchange polymer.

**Example 5: Preparation of Anion Exchange Membrane**

An anion exchange membrane was prepared in the same manner as in Example 1, except that 40 wt% of (vinylbenzyl)trimethylammonium chloride was used as an ionic monomer in the composition for forming the anion exchange polymer.

**Example 6: Preparation of Anion Exchange Membrane**

An anion exchange membrane was prepared in the same manner as in Example 1, except that a polypropylene (PP) porous polymer support (porosity: 55%) with a thickness of 60 μm was used.

**Example 7: Preparation of Anion Exchange Membrane**

An anion exchange membrane was prepared in the same manner as in Example 1, except that a polyvinyl alcohol (PVA) porous polymer support (porosity: 75%) with a thickness of 125 μm was used.

**Example 8: Preparation of Anion Exchange Membrane**

An anion exchange membrane was prepared in the same manner as in Example 1, except that 50 wt% of the crosslinkable monomer of Formula 1-1 obtained according to Preparation Example 1 and 10 wt% of the N-(2-acryloyloxyethyl)-N-benzyl-N,N-dimethylammonium chloride ionic monomer were used in the composition for forming the anion exchange polymer.

**Example 9: Preparation of Anion Exchange Membrane**

An anion exchange membrane was prepared in the same manner as in Example 1, except that 50 wt% of the crosslinkable monomer of Formula 1-1 obtained according to Preparation Example 1 and 10 wt% of the (2-acryloyloxyethyl)trimethylammonium chloride ionic monomer were used in the composition for forming the anion exchange polymer.

**Example 10: Preparation of Anion Exchange Membrane**

An anion exchange membrane was prepared in the same manner as in Example 1, except that 50 wt% of the crosslinkable monomer of Formula 1-1 obtained according to Preparation Example 1 and 10 wt% of the (3-acrylamidopropyl)trimethylammonium chloride ionic monomer were used in the composition for forming the anion exchange polymer.

**Example 11: Preparation of Anion Exchange Membrane**

An anion exchange membrane was prepared in the same manner as in Example 1, except that 50 wt% of the crosslinkable monomer of Formula 1-1 obtained according to Preparation Example 1 and 10 wt% of the 2-(acryloyloxy)-N,N-dimethyl-N-(4-methylbenzyl)ethane-1-ammonium chloride ionic monomer were used in the composition for forming the anion exchange polymer.

**Example 12: Preparation of Anion Exchange Membrane**

An anion exchange membrane was prepared in the same manner as in Example 1, except that 50 wt% of the crosslinkable monomer of Formula 1-1 obtained according to Preparation Example 1 and 10 wt% of the (vinylbenzyl) trimethylammonium chloride ionic monomer were used in the composition for forming the anion exchange polymer.

**Example 13: Preparation of Anion Exchange Membrane**

An anion exchange membrane was prepared in the same manner as in Example 1, except that 10 wt% of the crosslinkable monomer of Formula 1-1 obtained according to Preparation Example 1 and 50 wt% of the N-(2-acryloyloxyethyl)-N-benzyl-N,N-dimethylammonium chloride ionic monomer were used in the composition for forming the anion exchange polymer.

**Example 14: Preparation of Anion Exchange Membrane**

An anion exchange membrane was prepared in the same manner as in Example 1, except that 10 wt% of the crosslinkable monomer of Formula 1-1 obtained according to Preparation Example 1 and 50 wt% of the (2-acryloyloxyethyl)trimethylammonium chloride ionic monomer were used in the composition for forming the anion exchange polymer.

**Example 15: Preparation of Anion Exchange Membrane**

An anion exchange membrane was prepared in the same manner as in Example 1, except that 10 wt% of the crosslinkable monomer of Formula 1-1 obtained according to Preparation Example 1 and 50 wt% of the (3-acrylamidopropyl)trimethylammonium chloride ionic monomer were used in the composition for forming the anion exchange polymer.

**Example 16: Preparation of Anion Exchange Membrane**

An anion exchange membrane was prepared in the same manner as in Example 13, except that 10 wt% of the crosslinkable monomer of Formula 1-1 obtained according to Preparation Example 1 and 50 wt% of the 2-(acryloyloxy)-N,N-dimethyl-N-(4-methylbenzyl)ethane-1-ammonium chloride ionic monomer were used in the composition for forming the anion exchange polymer.

**Example 17: Preparation of Anion Exchange Membrane**

An anion exchange membrane was prepared in the same manner as in Example 13, except that 10 wt% of the crosslinkable monomer of Formula 1-1 obtained according to Preparation Example 1 and 50 wt% of the (vinylbenzyl) trimethylammonium chloride ionic monomer were used in the composition for forming the anion exchange polymer.

**Comparative Example 1: Preparation of Anion Exchange Membrane**

An anion exchange membrane was prepared in the same manner as in Example 1, except that only 60 wt% of the crosslinkable monomer of Formula 1-1 obtained according to Preparation Example 1 was used without an ionic monomer in the composition for forming the anion exchange membrane.

**Comparative Example 2: Preparation of Anion Exchange Membrane**

An anion exchange membrane was prepared in the same manner as in Example 1, except that 6 wt% of the crosslinkable monomer of Formula 1-1 obtained according to Preparation Example 1 and 54 wt% of the N-(2-acryloyloxyethyl)-N-benzyl-N,N-dimethylammonium chloride ionic monomer were used in the composition for forming the anion exchange polymer.

**Comparative Example 3: Preparation of Anion Exchange Membrane**

An anion exchange membrane was prepared in the same manner as in Example 1, except that 55 wt% of the crosslinkable monomer of Formula 1-1 obtained according to Preparation Example 1 and 5.5 wt% of the N-(2-acryloyloxyethyl)-N-benzyl-N,N-dimethylammonium chloride ionic monomer were used in the composition for forming the anion exchange polymer.

**Evaluation Example** 1: **Evaluation of Properties of Ion Exchange Membrane**

The anion exchange membrane prepared in Examples 1 to 7 and Comparative Examples 1 to 3 were tested using the following methods to evaluate their properties, and the evaluation results are shown in Table 1 below.

(1) Sheet resistance ($\Omega \cdot cm^2$)

Each anion exchange membrane was cut into a size of 5 cm X 5 cm to prepare a sample. The sample was immersed in a 0.5 M NaCl aqueous solution for 24 hours. The sample was placed between electrodes for measuring sheet resistance, and the wire resistance ($R_{11}$) of the anion exchange membrane and the resistance ($R_{12}$) of the 0.5 M NaCl aqueous solution were measured using an LCR meter (E4908A, Agilent). The measured resistance values (R11, $R_{12}$) were substituted into Equation 1 below to obtain the sheet resistance ($R_m$).

[Equation 1]

$$R_m(\Omega \cdot cm^2) = (R_{11} - R_{12}) \times S$$

wherein the equation,

$R_m$ is the sheet resistance of the anion exchange membrane,
$R_{11}$ is the wire resistance of the anion exchange membrane,
$R_{12}$ is the resistance of a 0.5 M NaCl aqueous solution, and
S is the area of the electrode.

(2) Ion Exchange Capacity (IEC, meq/g)

Each anion exchange membrane was cut into a size of 5 cm X 5 cm to prepare a sample. The sample was washed with distilled water and excess moisture was removed with a tissue. After filling a vial with 70 ml of a 1 M NaCl solution, the sample from which the moisture was removed was placed in the 1 M NaCl solution and soaked for more than 12 hours to perform first pretreatment. Then, the sample that completed the first pretreatment was washed several times with distilled water and excess moisture was removed with a tissue. After filling a vial with 70 ml of a 0.5 M $Na_2CO_3$ solution, the sample from which the moisture was removed was placed in the 0.5 M $Na_2CO_3$ solution and soaked for more than 12 hours to perform second pretreatment. Then, the sample that completed the secondary pretreatment was taken out of the vial, the remaining solution was titrated with 0.01 M $AgNO_3$ solution, and the volume of the $AgNO_3$ solution added during the titration was recorded. The above sample was washed several times with distilled water and then dried in a hot air oven at 80 °C for 15 minutes. After drying was completed, the weight of the dried anion exchange membrane was measured. The measured weight of the dried anion exchange membrane was substituted into Equation 2 below to obtain the ion exchange capacity (IEC).

IEC(meq/g) = (volume of titrant(ml) x 0.01)/weight of dried anion exchange membrane(g) [Equation 2]

(3) Appearance Evaluation

For each anion exchange membrane, the appearance was observed visually and evaluated using the following criteria.

·Good: No cracks or peeling on the surface
·Defect: Cracks or peeling on the surface

[Table 1]

| Category | Porous Polymer Support Material | Porous Polymer Support Porosity (%) | Porous Polymer Support Thickness (μm) | Sheet Resistance ($\Omega\cdot cm^2$) | Ion Exchange Capacity (meq/g) | Appearance Evaluation |
|---|---|---|---|---|---|---|
| **Example 1** | PP | 51 | 100 | 4.2 | 2.3 | Good |
| **Example 2** | PP | 51 | 100 | 4.0 | 2.2 | Good |
| **Example 3** | PP | 51 | 100 | 3.9 | 2.2 | Good |
| **Example 4** | PP | 51 | 100 | 4.3 | 2.1 | Good |
| **Example 5** | PP | 51 | 100 | 3.8 | 2.3 | Good |
| **Example 6** | PP | 55 | 60 | 2.1 | 2.9 | Good |
| **Example 7** | PVA | 75 | 125 | 2.0 | 3.4 | Good |
| **Example 8** | PP | 51 | 100 | 5.5 | 2.7 | Good |
| **Example 9** | PP | 51 | 100 | 5.2 | 2.8 | Good |
| **Example 10** | PP | 51 | 100 | 5.0 | 2.7 | Good |
| **Example 11** | PP | 51 | 100 | 5.8 | 2.6 | Good |
| **Example 12** | PP | 51 | 100 | 4.8 | 2.8 | Good |
| **Example 13** | PP | 51 | 100 | 3.8 | 1.8 | Good |
| **Example 14** | PP | 51 | 100 | 3.5 | 1.9 | Good |
| **Example 15** | PP | 51 | 100 | 3.5 | 1.9 | Good |
| **Example 16** | PP | 51 | 100 | 4.0 | 1.7 | Good |
| **Example 17** | PP | 51 | 100 | 3.4 | 1.9 | Good |
| **Comparative Example 1** | PP | 51 | 100 | 6.3 | 2.9 | Defective (Crack) |
| **Comparative Example 2** | PP | 51 | 100 | 3.7 | 1.4 | Defective (Peeling) |
| **Comparative Example 3** | PP | 51 | 100 | 6.1 | 2.7 | Defective (Crack) |

Referring to Table 1 above, it may be confirmed that the anion exchange membranes of Examples 1 to 17 have excellent sheet resistances of 6 $\Omega\cdot cm^2$ or less and ion exchange capacities of 1.5 meq/g or more, and good appearances. In comparison, it may be confirmed that the ion exchange membrane of Comparative Example 1, which did not use an ionic monomer, had a high sheet resistance of 6.3 $\Omega\cdot cm^2$, and cracks occurred on the surface, resulting in a poor appearance. It may be confirmed that the ion exchange membrane of Comparative Example 2, which used a composition for forming an anion exchange polymer prepared in a weight ratio of 1:9 of the crosslinkable monomer of Formula 1-1 and the ionic monomer obtained according to Preparation Example 1, had a low ion exchange capacity of 1.4 meq/g, and electrolyte peeling occurred on the surface, resulting in poor appearance. It may be confirmed that the ion exchange membrane of Comparative Example 3, which used a composition for forming an anion exchange polymer prepared in a weight ratio of 1:0.1 of the crosslinkable monomer of Formula 1-1 and the ionic monomer obtained according to Preparation Example 1, had a high sheet resistance of 6.1 $\Omega\cdot cm^2$, and cracks occurred on the surface, resulting in a poor appearance.

From this, the anion exchange membranes of Examples 1 to 17 may provide anion exchange membranes having high ion exchange capacity and good appearance.

Although example embodiments have been described in detail with reference to the attached drawings, the present creative idea is not limited to these examples. It is obvious that a person of ordinary skill in the technical field to which the present technical idea belongs may derive various examples of changes or modifications within the scope of the technical idea disclosed in the patent claims, and these also naturally fall within the technical scope of the present creative idea.

[List of Reference Numerals for Major Elements]

20: porous polymer support, 21: pores,
30: Anion exchange polymer backbone having a cationic functional group,
31: Anion exchange polymer

## Claims

1. An anion exchange membrane comprising:

a porous polymer support; and
an electrolyte containing an anion exchange polymer,
wherein the electrolyte is located on at least a portion of a surface and
inside of pores of the porous polymer support,
wherein the anion exchange polymer is a crosslinked product of a composition comprising a crosslinkable monomer represented by Formula 1 and an ionic monomer represented by Formula 2,

[Formula 1] [Formula 2]

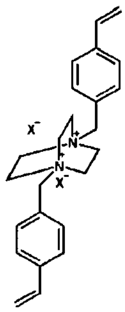

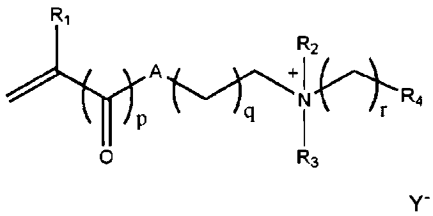

wherein in Formula 1,
$X^-$ is a halogen anion;
wherein in Formula 2,
A is -O-,

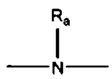
,

or

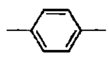
,

wherein $R_a$ is hydrogen, a substituted or unsubstituted C1 to C20 alkyl group, or a substituted or unsubstituted C5 to C40 aryl group;
$R_1$ is hydrogen or a substituted or unsubstituted C1 to C20 alkyl group;
$R_2$ and $R_3$ are each independently a substituted or unsubstituted C1 to C20 alkyl group, or a substituted or unsubstituted C5 to C40 aryl group;
$R_4$ is a substituted or unsubstituted C1 to C20 alkyl group, a substituted or unsubstituted C3 to C30 cycloalkyl group, or a substituted or unsubstituted C6 to C30 aryl group;
p is 0 or 1;
q is an integer from 0 to 6;
r is an integer from 0 to 6; and
$Y^-$ is a halogen anion.

2. The anion exchange membrane of claim 1,
wherein in Formula 2,
$R_4$ is a substituted or unsubstituted C1 to C10 alkyl group, or a substituted or unsubstituted C6 to C20 aryl group.

**3.** The anion exchange membrane of claim 1, wherein in Formula 2:

A is -O-; and
$R_4$ is a substituted or unsubstituted C1 to C5 alkyl group, or a substituted or unsubstituted C6 to C15 aryl group.

**4.** The anion exchange membrane of claim 1, wherein the ionic monomer comprises:

(3-acrylamidopropyl)trimethylammonium chloride, (3-acrylamidopropyl)trimethylammonium bromide, (3-acrylamidopropyl)trimethylammonium iodide;
(3-methacryloylamidopropyl)trimethylammonium chloride, (3-methacryloylamidopropyl)trimethylammonium bromide, (3-methacryloylamidopropyl)trimethylammonium iodide;
(2-acryloyloxyethyl)trimethylammonium chloride, (2-acryloyloxyethyl)trimethylammonium bromide, (2-acryloyloxyethyl)trimethylammonium iodide;
(2-methacryloyloxyethyl)trimethylammonium chloride, (2-methacryloyloxyethyl)trimethylammonium bromide, (2-methacryloyloxyethyl)trimethylammonium iodide;
N-(2-acryloyloxyethyl)-N-benzyl-N,N-dimethylammonium chloride, N-(2-acryloyloxyethyl)-N-benzyl-N,N-dimethylammonium bromide, N-(2-acryloyloxyethyl)-N-benzyl-N,N-dimethylammonium iodide;
benzyl dimethyl[2-(2-methyl-1-oxoallyl)oxyethyl]ammonium chloride, benzyl dimethyl[2-(2-methyl-1-oxoallyl) oxyethyl]ammonium bromide, benzyl dimethyl[2-(2-methyl-1-oxoallyl)oxyethyl]ammonium iodide;
2-(acryloyloxy)-N,N-dimethyl-N-(2-methylbenzyl)ethane-1-ammonium chloride, 2-(acryloyloxy)-N,N-dimethyl-N-(2-methylbenzyl)ethane-1-ammonium bromide, 2-(acryloyloxy)-N,N-dimethyl-N-(2-methylbenzyl)ethane-1-ammonium iodide;
2-(acryloyloxy)-N,N-dimethyl-N-(3-methylbenzyl)ethane-1-ammonium chloride, 2-(acryloyloxy)-N,N-dimethyl-N-(3-methylbenzyl)ethane-1-ammonium bromide, 2-(acryloyloxy)-N,N-dimethyl-N-(3-methylbenzyl)ethane-1-ammonium iodide;
2-(acryloyloxy)-N,N-dimethyl-N-(4-methylbenzyl)ethane-1-ammonium chloride, 2-(acryloyloxy)-N,N-dimethyl-N-(4-methylbenzyl)ethane-1-ammonium bromide, 2-(acryloyloxy)-N,N-dimethyl-N-(4-methylbenzyl)ethane-1-ammonium iodide;
2-(acryloyloxy)-N-(3,5-dimethylbenzyl)-N,N-dimethylethane-1-ammonium chloride, 2-(acryloyloxy)-N-(3,5-dimethylbenzyl)-N,N-dimethylethane-1-ammonium bromide, 2-(acryloyloxy)-N-(3,5-dimethylbenzyl)-N,N-dimethylethane-1-ammonium iodide;
2-(acryloyloxy)-N-(4-isopropylbenzyl)-N,N-dimethylethane-1-ammonium chloride, 2-(acryloyloxy)-N-(4-isopropylbenzyl)-N,N-dimethylethane-1-ammonium bromide, 2-(acryloyloxy)-N-(4-isopropylbenzyl)-N,N-dimethylethane-1-ammonium iodide;
2-(acryloyloxy)-N-(4-(tert-butyl)benzyl)-N,N-dimethylethane-1-ammonium chloride, 2-(acryloyloxy)-N-(4-(tert-butyl)benzyl)-N,N-dimethylethane-1-ammonium bromide, 2-(acryloyloxy)-N-(4-(tert-butyl)benzyl)-N,N-dimethylethane-1-ammonium iodide;
2-(acryloyloxy)-N-(3,5-di-tert-butylbenzyl)-N,N-dimethylethane-1-ammonium chloride, 2-(acryloyloxy)-N-(3,5-di-tert-butylbenzyl)-N,N-dimethylethane-1-ammonium bromide, 2-(acryloyloxy)-N-(3,5-di-tert-butylbenzyl)-N,N-dimethylethane-1-ammonium iodide;
2-(acryloyloxy)-N,N-dimethyl-N-(naphthalen-1-ylmethyl)ethane-1-ammonium chloride, 2-(acryloyloxy)-N,N-dimethyl-N-(naphthalen-1-ylmethyl)ethane-1-ammonium bromide, 2-(acryloyloxy)-N,N-dimethyl-N-(naphthalen-1-ylmethyl)ethane-1-ammonium iodide;
2-(acryloyloxy)-N-((9,10-dihydropyrene-4-yl)methyl)-N,N-dimethylethane-1-ammonium chloride, 2-(acryloyloxy)-N-((9,10-dihydropyrene-4-yl)methyl)-N,N-dimethylethane-1-ammonium bromide, 2-(acryloyloxy)-N-((9,10-dihydropyrene-4-yl)methyl)-N,N-dimethylethane-1-ammonium iodide;
(vinylbenzyl)trimethylammonium chloride, (vinylbenzyl)trimethylammonium bromide, (vinylbenzyl)trimethylammonium iodide; or
(2-methylvinylbenzyl)trimethylammonium chloride, (2-methylvinylbenzyl)trimethylammonium bromide, (2-methylvinylbenzyl)trimethylammonium iodide.

**5.** The anion exchange membrane of claim 1, wherein a weight ratio of the crosslinkable monomer to the ionic monomer is 1:0.2 to 1:8.

**6.** The anion exchange membrane of claim 1, wherein a total content of the crosslinkable monomer and the ionic monomer is 30 wt% to 85 wt%, based on 100 wt% of

all of the composition.

**7.** The anion exchange membrane of claim 1, wherein the composition further comprises a photoinitiator, and a content of the photoinitiator is 0.01 wt% to 2 wt%, based on 100 wt% of all of the composition.

**8.** The anion exchange membrane of claim 1, wherein the porous polymer support is a membrane structure, a nonwoven fabric structure, a woven fabric structure, or a mesh structure.

**9.** The anion exchange membrane of claim 1, wherein the porous polymer support comprises one or more polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone.

**10.** The anion exchange membrane of claim 1, wherein porosity of the porous polymer support is 30 % to 80 %, and a thickness of the porous polymer support is 10 $\mu$m to 150 $\mu$m.

**11.** The anion exchange membrane of claim 1,

wherein sheet resistance ($R_m$) of the anion exchange membrane, according to the following Equation 1, is 6 $\Omega\cdot cm^2$ or less:

[Equation 1]

$$R_m(\Omega\cdot cm^2) = (R_{11} - R1_2) \times S$$

wherein in the equation,
$R_m$ is the sheet resistance of the anion exchange membrane,
$R_{11}$ is wire resistance of the anion exchange membrane,
$R_{12}$ is resistance of a 0.5 M NaCl aqueous solution, and
S is the area of the electrode.

**12.** The anion exchange membrane of claim 1, wherein an ion exchange capacity (IEC) of the anion exchange membrane is 1.5 meq/g or more.

**13.** The anion exchange membrane of claim 1, wherein the anion exchange membrane is used in electrodialysis, bipolar membrane electrodialysis, electrodeionization, capacitive deionization, or water electrolysis systems.

**14.** A method of preparing an anion exchange membrane according to any one of claims 1 to 13, comprising:

providing a porous polymer support;
preparing a composition for forming an anion exchange polymer, comprising a crosslinkable monomer represented by Formula 1, an ionic monomer represented by Formula 2, a photoinitiator, and a solvent;
impregnating the porous polymer support with the composition, thereby filling at least a portion of a surface and inside of pores of the porous polymer support with the composition;
pressing a polyester-based film onto at least one surface of the porous polymer support filled with the composition, to produce a laminate in which the polyester-based film and the porous polymer support are laminated;
irradiating light to the laminate and crosslinking the composition to form an anion exchange polymer, as a crosslinked product of the composition, on at least a portion of the surface and the inside of the pores of the porous polymer support; and
peeling the polyester-based film from the porous polymer support having the anion exchange polymer formed on at least a portion of the surface thereof and internal pores thereof, to prepare the anion exchange membrane.

[Formula 1] [Formula 2]

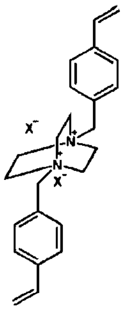

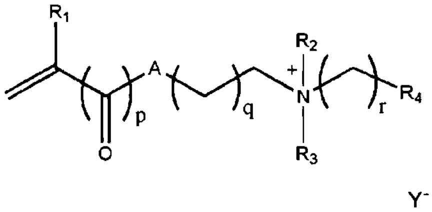

wherein in Formula 1,
$X^-$ is a halogen anion;
wherein in Formula 2,
A is -O-,

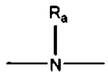 ,

or

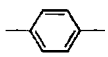 ,

wherein $R_a$ is hydrogen, a substituted or unsubstituted C1 to C20 alkyl group, or a substituted or unsubstituted C5 to C40 aryl group;
$R_1$ is hydrogen or a substituted or unsubstituted C1 to C20 alkyl group;
$R_2$ and $R_3$ are each independently a substituted or unsubstituted C1 to C20 alkyl group, or a substituted or unsubstituted C5 to C40 aryl group;
$R_4$ is a substituted or unsubstituted C1 to C20 alkyl group, a substituted or unsubstituted C3 to C30 cycloalkyl group, or a substituted or unsubstituted C5 to C30 aryl group;
p is 0 or 1;
q is an integer from 0 to 6;
r is an integer from 0 to 6; and
$Y^-$ is a halogen anion.

**15.** The method of claim 14,

wherein in the forming of the anion exchange polymer, the light is ultraviolet rays, and
a process of irradiating the light with a light intensity of 2000 mJ/$cm^2$ to 10000 mJ/$cm^2$ is included.

FIG. 1

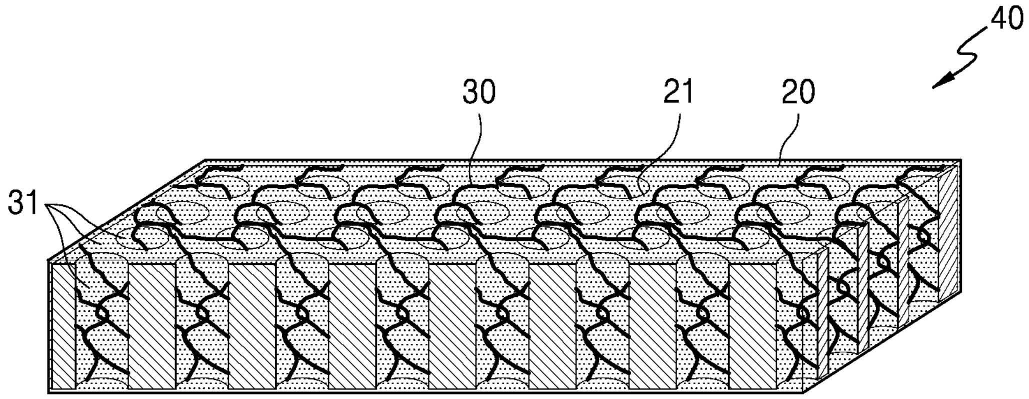

**INTERNATIONAL SEARCH REPORT**

International application No.
**PCT/KR2024/010798**

**A. CLASSIFICATION OF SUBJECT MATTER**

**C08J 5/22**(2006.01)i; **C08F 212/34**(2006.01)i; **C08F 226/02**(2006.01)i; **C08F 2/50**(2006.01)i; **B01D 61/42**(2006.01)i; **B01D 69/10**(2006.01)i

According to International Patent Classification (IPC) or to both national classification and IPC

**B. FIELDS SEARCHED**

Minimum documentation searched (classification system followed by classification symbols)

C08J 5/22(2006.01); B01D 61/00(2006.01); B01D 61/42(2006.01); B01D 61/44(2006.01); C08F 12/34(2006.01); C08F 212/14(2006.01); C08J 3/24(2006.01); C09D 125/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음이온 교환막(anionic exchange membrane), 다공성 고분자 지지체(porous polymer support), 음이온 교환 폴리머(anionic exchange polymer), 가교성 모노머(cross-linkable monomer), 이온성 모노머(ionic monomer), 4차 암모늄(quaternary ammonium)

**C. DOCUMENTS CONSIDERED TO BE RELEVANT**

| Category* | Citation of document, with indication, where appropriate, of the relevant passages | Relevant to claim No. |
|---|---|---|
| X | JP 2015-048380 A (FUJIFILM CORP.) 16 March 2015 (2015-03-16)<br>See claims 1, 2, 8, 11 and 15; paragraphs [0002], [0029], [0031], [0032], [0071], [0078], [0081], [0090], [0091], [0094], [0103], [0116], [0142], [0168], [0171] and [0186]; and example 1. | 1-13 |
| Y | | 14,15 |
| Y | KR 10-2020-0045034 A (KOREA INSTITUTE OF ENERGY RESEARCH) 04 May 2020 (2020-05-04)<br>See paragraphs [0089], [0090] and [0091]. | 14,15 |
| A | KR 10-2012-0059585 A (SIEMENS PTE. LTD.) 08 June 2012 (2012-06-08)<br>See claims 1-23. | 1-15 |
| A | JP 6313454 B2 (FUJIFILM CORP.) 18 April 2018 (2018-04-18)<br>See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/010798

C. DOCUMENTS CONSIDERED TO BE RELEVANT

| Category* | Citation of document, with indication, where appropriate, of the relevant passages | Relevant to claim No. |
|---|---|---|
| A | KR 10-2015-0099549 A (KURARAY CO., LTD. et al.) 31 August 2015 (2015-08-31) See entire document. | 1-15 |

Form PCT/ISA/210 (second sheet) (July 2022)

**INTERNATIONAL SEARCH REPORT**
**Information on patent family members**

International application No.
**PCT/KR2024/010798**

| Patent document cited in search report | Publication date (day/month/year) | Patent family member(s) | Publication date (day/month/year) |
|---|---|---|---|
| JP 2015-048380 A | 16 March 2015 | CN 105492508 A | 13 April 2016 |
| | | CN 105492508 B | 20 April 2018 |
| | | EP 3040365 A1 | 06 July 2016 |
| | | EP 3040365 B1 | 01 March 2017 |
| | | ES 2621314 T3 | 03 July 2017 |
| | | JP 6047079 B2 | 21 December 2016 |
| | | US 2016-0177006 A1 | 23 June 2016 |
| | | WO 2015-030070 A1 | 05 March 2015 |
| KR 10-2020-0045034 A | 04 May 2020 | KR 10-2166203 B1 | 16 October 2020 |
| KR 10-2012-0059585 A | 08 June 2012 | AU 2010-286605 A1 | 15 March 2012 |
| | | AU 2010-286605 B2 | 13 August 2015 |
| | | BR 112012007876 A2 | 24 September 2019 |
| | | CA 2772306 A1 | 03 March 2011 |
| | | CA 2772306 C | 29 October 2019 |
| | | CL 2012000491 A1 | 03 August 2012 |
| | | CN 102753253 A | 24 October 2012 |
| | | CN 102753253 B | 13 April 2016 |
| | | EA 023476 B1 | 30 June 2016 |
| | | EA 201270317 A1 | 30 August 2012 |
| | | EP 2470290 A1 | 04 July 2012 |
| | | EP 2470290 B1 | 24 July 2019 |
| | | EP 3572143 A1 | 27 November 2019 |
| | | EP 3572143 B1 | 02 June 2021 |
| | | ES 2748340 T3 | 16 March 2020 |
| | | ES 2882803 T3 | 02 December 2021 |
| | | IL 218217 A | 30 April 2012 |
| | | IL 218217 B | 30 November 2016 |
| | | IN 1816DEN2012 A | 05 June 2015 |
| | | JP 2013-503038 A | 31 January 2013 |
| | | JP 5948243 B2 | 06 July 2016 |
| | | KR 10-1741243 B1 | 15 June 2017 |
| | | MX 2012002386 A | 07 September 2012 |
| | | SG 169305 A1 | 30 March 2011 |
| | | SG 185971 A1 | 28 December 2012 |
| | | US 2011-0068002 A1 | 24 March 2011 |
| | | US 2014-0166488 A1 | 19 June 2014 |
| | | US 2015-0217234 A1 | 06 August 2015 |
| | | US 8703831 B2 | 22 April 2014 |
| | | US 9023902 B2 | 05 May 2015 |
| | | US 9731247 B2 | 15 August 2017 |
| | | WO 2011-025867 A1 | 03 March 2011 |
| | | ZA 201201408 B | 28 January 2015 |
| JP 6313454 B2 | 18 April 2018 | EP 3184558 A1 | 28 June 2017 |
| | | EP 3184558 B1 | 29 August 2018 |
| | | WO 2016-027595 A1 | 25 February 2016 |
| KR 10-2015-0099549 A | 31 August 2015 | CN 104884510 A | 02 September 2015 |
| | | CN 104884510 B | 20 October 2017 |
| | | EP 2940068 A1 | 04 November 2015 |
| | | JP 6358597 B2 | 18 July 2018 |
| | | TW 201434935 A | 16 September 2014 |

Form PCT/ISA/210 (patent family annex) (July 2022)

**INTERNATIONAL SEARCH REPORT**
**Information on patent family members**

International application No.
**PCT/KR2024/010798**

| Patent document cited in search report | Publication date (day/month/year) | Patent family member(s) | Publication date (day/month/year) |
|---|---|---|---|
| | | TW I616481 B | 01 March 2018 |
| | | US 10125036 B2 | 13 November 2018 |
| | | US 2015-0291452 A1 | 15 October 2015 |
| | | WO 2014-103819 A1 | 03 July 2014 |

Form PCT/ISA/210 (patent family annex) (July 2022)